# EUROPEAN PATENT SPECIFICATION

(11) **EP 3 554 697 B1**
(45) Date of publication and mention of the grant of the patent: **19.07.2023**
(21) Application number: 17817839.8
(22) Date of filing: 15.12.2017
(51) Int. Cl.: B01J 37/02, B01J 23/63, B01J 35/04, B01D 53/94, B01J 23/00, B01J 29/74

(54) **NOX ADSORBER CATALYST**
NOX ADSORBER KATALYSATOR
CATALYSEUR ADSORBEUR DES NOX

(30) Priority: 15.12.2016 GB 201621343
(43) Date of publication of application: 23.10.2019
(73) Proprietor: Johnson Matthey Public Limited Company, London, Greater London EC4A 4AB (GB)
(72) Inventor: CHANDLER, Guy, Royston Hertfordshire SG8 5HE (GB); PRITZWALD-STEGMANN, Julian, Royston Hertfordshire SG8 5HE (GB)
(74) Representative: Bown, Mark Richard
(86) International application number: PCT/GB2017/053756
(87) International publication number: WO 2018/109485

(56) References cited:
- WO-A1-2009/158453
- WO-A1-2011/154913
- US-A1- 2015 266 014

## Description

### FIELD OF THE INVENTION

The invention relates to a lean NOₓ trap catalyst, a method of treating an exhaust gas from an internal combustion engine, and emission systems for internal combustion engines comprising the lean NOₓ trap catalyst.

### BACKGROUND OF THE INVENTION

Internal combustion engines produce exhaust gases containing a variety of pollutants, including nitrogen oxides ("NOₓ"), carbon monoxide, and uncombusted hydrocarbons, which are the subject of governmental legislation. Increasingly stringent national and regional legislation has lowered the amount of pollutants that can be emitted from such diesel or gasoline engines. Emission control systems are widely utilized to reduce the amount of these pollutants emitted to atmosphere, and typically achieve very high efficiencies once they reach their operating temperature (typically, 200 °C and higher). However, these systems are relatively inefficient below their operating temperature (the "cold start" period).

One exhaust gas treatment component utilized to clean exhaust gas is the NOₓ adsorber catalyst (or "NOₓ trap"). NOₓ adsorber catalysts are devices that adsorb NOₓ under lean exhaust conditions, release the adsorbed NOₓ under rich conditions, and reduce the released NOₓ to form N₂. A NOₓ adsorber catalyst typically includes a NOₓ adsorbent for the storage of NOₓ and an oxidation/reduction catalyst.

The NOₓ adsorbent component is typically an alkaline earth metal, an alkali metal, a rare earth metal, or combinations thereof. These metals are typically found in the form of oxides. The oxidation/reduction catalyst is typically one or more noble metals, preferably platinum, palladium, and/or rhodium. Typically, platinum is included to perform the oxidation function and rhodium is included to perform the reduction function. The oxidation/reduction catalyst and the NOₓ adsorbent are typically loaded on a support material such as an inorganic oxide for use in the exhaust system.

The NOₓ adsorber catalyst performs three functions. First, nitric oxide reacts with oxygen to produce NO₂ in the presence of the oxidation catalyst. Second, the NO₂ is adsorbed by the NOₓ adsorbent in the form of an inorganic nitrate (for example, BaO or BaCO₃ is converted to Ba(NO₃)₂ on the NOₓ adsorbent). Lastly, when the engine runs under rich conditions, the stored inorganic nitrates decompose to form NO or NO₂ which are then reduced to form N₂ by reaction with carbon monoxide, hydrogen and/or hydrocarbons (or via NHₓ or NCO intermediates) in the presence of the reduction catalyst. Typically, the nitrogen oxides are converted to nitrogen, carbon dioxide and water in the presence of heat, carbon monoxide and hydrocarbons in the exhaust stream.

PCT Intl. Appl. WO 2004/076829 discloses an exhaust-gas purification system which includes a NOₓ storage catalyst arranged upstream of an SCR catalyst. The NOₓ storage catalyst includes at least one alkali, alkaline earth, or rare earth metal which is coated or activated with at least one platinum group metal (Pt, Pd, Rh, or Ir). A particularly preferred NOₓ storage catalyst is taught to include cerium oxide coated with platinum and additionally platinum as an oxidizing catalyst on a support based on aluminium oxide. EP 1027919 discloses a NOₓ adsorbent material that comprises a porous support material, such as alumina, zeolite, zirconia, titania, and/or lanthana, and at least 0.1 wt% precious metal (Pt, Pd, and/or Rh). Platinum carried on alumina is exemplified.

In addition, US Pat. Nos. 5,656,244 and 5,800,793 describe systems combining a NOₓ storage/release catalyst with a three way catalyst. The NOₓ adsorbent is taught to comprise oxides of chromium, copper, nickel, manganese, molybdenum, or cobalt, in addition to other metals, which are supported on alumina, mullite, cordierite, or silicon carbide.

PCT Intl. Appl. WO 2009/158453 describes a lean NOₓ trap catalyst comprising at least one layer containing NOₓ trapping components, such as alkaline earth elements, and another layer containing ceria and substantially free of alkaline earth elements. This configuration is intended to improve the low temperature, e.g. less than about 250 °C, performance of the LNT.

US 2015/0336085 describes a nitrogen oxide storage catalyst composed of at least two catalytically active coatings on a support body. The lower coating contains cerium oxide and platinum and/or palladium. The upper coating, which is disposed above the lower coating, contains an alkaline earth metal compound, a mixed oxide, and platinum and palladium. The nitrogen oxide storage catalyst is said to be particularly suitable for the conversion of NOₓ in exhaust gases from a lean burn engine, e.g. a diesel engine, at temperatures of between 200 and 500 °C.

As with any automotive system and process, it is desirable to attain still further improvements in exhaust gas treatment systems. We have discovered a new lean NOₓ trap catalyst with improved NOₓ storage and conversion characteristics, as well as improved CO and/or HC conversions.

### SUMMARY OF THE INVENTION

The invention is defined in the appended claims.

In a first aspect of the invention there is provided a lean NOₓ trap catalyst as defined in appended claim 1.

In a second aspect of the invention there is provided an emission treatment system for treating a flow of a combustion exhaust gas, comprising the lean NOₓ trap catalyst as hereinbefore defined and an internal combustion engine, as defined in appended claim 10.

In a third aspect of the invention there is provided a method of treating an exhaust gas from an internal combustion engine comprising contacting the exhaust gas with the lean NOₓ trap catalyst or the emission treatment system as hereinbefore defined, as defined in appended claim 12.

### BRIEF DESCRIPTION OF THE DRAWINGS

In order that the invention may be more fully understood, the following Examples are provided by way of illustration only and with reference to the accompanying drawings, wherein:
**Figure 1** is MVEG-B evaluation related to cumulative NOₓ pollutant emissions of comparative catalyst 1 and catalyst 2 from a deactivated state and activated state;
**Figure 2** is MVEG-B evaluation related to cumulative CO pollutant emissions of comparative catalyst 1 and catalyst 2 from a deactivated state and activated state;
**Figure 3** is MVEG-B evaluation related to cumulative HC pollutant emissions of comparative catalyst 1 and catalyst 2 from a deactivated state and activated state; and
**Figure 4** is SCAT Light-Off evaluation of comparative catalyst 1 and catalyst 2 from a deactivated state and activated state.

### DEFINITIONS

The term "washcoat" is well known in the art and refers to an adherent coating that is applied to a substrate, usually during production of a catalyst.

The acronym "PGM" as used herein refers to "platinum group metal". The term "platinum group metal" generally refers to a metal selected from the group consisting of ruthenium, rhodium, palladium, osmium, iridium and platinum, preferably a metal selected from the group consisting of ruthenium, rhodium, palladium, iridium and platinum. In general, the term "PGM" preferably refers to a metal selected from the group consisting of rhodium, platinum and palladium.

The term "noble metal" as used herein refers to generally refers to a metal selected from the group consisting of ruthenium, rhodium, palladium, silver, osmium, iridium, platinum, and gold. In general, the term "noble metal" preferably refers to a metal selected from the group consisting of rhodium, platinum, palladium and gold.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The term "promoter" means a substance that is effective to promote or enhance a chemical reaction, e.g. a catalytic chemical reaction. Examples of such chemical reactions include, but are not limited to, the oxidation of CO and hydrocarbons, the oxidation of NO to NO₂, and the reduction of NOₓ to N₂ or NH₃.

The expression "substantially free of" as used herein with reference to a material means that the material may be present in a minor amount, such as ≤ 5% by weight, preferably ≤ 2 % by weight, more preferably ≤ 1 % by weight. The expression "substantially free of" embraces the expression "does not comprise".

The term "loading" as used herein refers to a measurement in units of g/ft³ on a metal weight basis.

### DETAILED DESCRIPTION OF THE INVENTION

In one aspect, the invention comprises a lean NOx trap catalyst as defined in appended claim 1.

The first layer comprises a mixture or alloy of platinum and palladium, preferably wherein the ratio of platinum to palladium is from 1:1 to 10:1 on a w/w basis, especially preferably about 2:1 on a w/w basis.

The mixture or alloy of platinum and palladium is generally in contact with the first inorganic oxide. Preferably the mixture or alloy of platinum and palladium is supported on the first inorganic oxide.

The first inorganic oxide is selected from the group consisting of alumina, silica-alumina, or a magnesia/alumina composite oxide.

Preferred first inorganic oxides preferably have a surface area in the range 10 to 1500 m²/g, pore volumes in the range 0.1 to 4 mL/g, and pore diameters from about 10 to 1000 Angstroms. High surface area inorganic oxides having a surface area greater than 80 m²/g are particularly preferred, e.g. high surface area alumina. Other preferred first inorganic oxides include magnesia/alumina composite oxides,

The promoter may comprise manganese, bismuth, or barium. Preferably the promoter comprises barium.

Particularly preferably, when the promoter comprises barium, the promoter does not comprise manganese or bismuth.

The promoter is preferably present in an amount of 0.1 to 10 wt%, and more preferably 0.5 to 5 weight percent, e.g. about 3-4 weight percent, expressed as a weight % of the composition.

The promoter is preferably deposited on the first inorganic oxide.

The first layer may function as an oxidation layer, e.g. a diesel oxidation catalyst (DOC) layer suitable for the oxidation of hydrocarbons to CO₂ and/or CO, and/or suitable for the oxidation of NO to NO₂. Preferably, the first layer is a lean DOC layer.

The first layer further comprises a hydrocarbon absorbing aterial being a molecular sieve (e.g. an aluminosilicate zeolite or an isotype such as a SAPO). Preferably, the hydrocarbon adsorbing material is a zeolite. Examples of suitable zeolites include natural zeolites, such as analcime, chabazite, erionite, natrolite, mordenite, heulandite, stilbite and laumantite, and synthetic zeolites, such as zeolite type A, zeolite type Y, zeolite type X, zeolite type L, erionite, mordenite, beta zeolite and ZSM-5. Preferably, the hydrocarbon absorbing material is a zeolite, particularly preferably a beta zeolite.

The hydrocarbon absorbing material, e.g., a zeolite, more preferably a beta zeolite, can be present in an amount of 10-30 wt%, particularly preferably 15-20 wt%, in the first layer.

The one or more platinum group metals (PGM) is preferably selected from the group consisting of palladium, platinum, rhodium, and mixtures thereof. Particularly preferably, the one or more platinum group metals is a mixture or alloy of platinum and palladium, preferably wherein the ratio of platinum to palladium is from 2:1 to 12:1 on a w/w basis, especially preferably about 5:1 on a w/w basis.

The lean NOₓ trap catalyst preferably comprises 0.1 to 10 weight percent PGM, more preferably 0.5 to 5 weight percent PGM, and most preferably 1 to 3 weight percent PGM.

The OSC material is selected from the group consisting of cerium oxide, zirconium oxide, a ceria-zirconia mixed oxide, and an alumina-ceria-zirconia mixed oxide. Preferably the OSC material comprises bulk ceria. In addition, the OSC material may function as a NOₓ storage material, and/or as a support material for the one or more noble metals.

The second layer may further comprise an alkali or alkali earth metal, neodymium, or lanthanum. The alkali or alkali earth metal, neodymium, or lanthanum may be deposited on the OSC material. Alternatively, or in addition, the alkali or alkali earth metal, neodymium, or lanthanum may be deposited on the second inorganic oxide. That is, in some embodiments, the alkali or alkali earth metal, neodymium, or lanthanum may be deposited on, i.e. present on, both the OSC material and the second inorganic oxide.

The alkali or alkali earth metal is preferably barium. Barium, where present, is included as a NOₓ storage material, i.e. the second layer may be a NOₓ storage layer. Preferably the barium, where present, is present in an amount of 0.1 to 10 wt%, and more preferably 0.5 to 5 weight percent barium, e.g. about 4.5 weight percent barium, expressed as a weight % of the composition.

Preferably the barium is present as a CeO₂-BaCO₃ composite material. Such a material can be preformed by any method known in the art, for example incipient wetness impregnation or spray-drying. Thus the OSC and the barium may together form a NOx storage material.

The second inorganic oxide is preferably an oxide of Groups 2, 3, 4, 5, 13 and 14 elements. The second inorganic oxide is preferably selected from the group consisting of alumina, magnesia, lanthana, silica, titania, niobia, tantalum oxides, molybdenum oxides, tungsten oxides, and mixed oxides or composite oxides thereof. Particularly preferably, the second inorganic oxide is alumina, a lanthana/alumina composite oxide, or a magnesia/alumina composite oxide. One especially preferred inorganic oxide is a lanthana/alumina composite oxide or a magnesia/alumina composite oxide, particularly preferably a lanthana/alumina composite oxide.

The second inorganic oxide may be a support material for the one or more platinum group metals, and/or for the alkali or alkali earth metal, neodymium or lanthanum.

Preferred second inorganic oxides preferably have a surface area in the range 10 to 1500 m²/g, pore volumes in the range 0.1 to 4 mL/g, and pore diameters from about 10 to 1000 Angstroms. High surface area inorganic oxides having a surface area greater than 80 m²/g are particularly preferred, e.g. high surface area alumina. Other preferred second inorganic oxides include magnesia/alumina composite oxides, optionally further comprising a ceriumcontaining component, e.g. ceria. In such cases the ceria may be present on the surface of the magnesia/alumina composite oxide, e.g. as a coating.

The lean NOₓ trap catalysts of the invention may comprise further components that are known to the skilled person. For example, the compositions of the invention may further comprise at least one binder and/or at least one surfactant. Where a binder is present, dispersible alumina binders are preferred.

The lean NOₓ trap catalysts of the invention may preferably further comprise a metal or ceramic substrate having an axial length L. Preferably the substrate is a flow-through monolith or a filter monolith, but is preferably a flow-through monolith substrate.

The flow-through monolith substrate has a first face and a second face defining a longitudinal direction therebetween. The flow-through monolith substrate has a plurality of channels extending between the first face and the second face. The plurality of channels extend in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 100 to 500 channels per square inch, preferably from 200 to 400. For example, on the first face, the density of open first channels and closed second channels is from 200 to 400 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates is well known in the art.

It should be noted that the flow-through monolith substrate described herein is a single component (i.e. a single brick). Nonetheless, when forming an emission treatment system, the monolith used may be formed by adhering together a plurality of channels or by adhering together a plurality of smaller monoliths as described herein. Such techniques are well known in the art, as well as suitable casings and configurations of the emission treatment system.

In embodiments wherein the lean NOₓ trap catalyst comprises a ceramic substrate, the ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the lean NOₓ trap catalyst comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

The lean NOₓ trap catalysts of the invention may be prepared by any suitable means. For example, the first layer may be prepared by mixing the one or more noble metals, a first inorganic oxide and a promoter in any order. The manner and order of addition is not considered to be particularly critical. For example, each of the components of the first layer may be added to any other component or components simultaneously, or may be added sequentially in any order. Each of the components of the first layer may be added to any other component of the first layer by impregnation, adsorption, ion-exchange, incipient wetness, precipitation, or the like, or by any other means commonly known in the art.

The second layer may be prepared by mixing the one or more platinum group metals, an OSC material, a second inorganic oxide, and, where present, a second alkali or alkali earth metal, neodymium or lanthanum in any order. The manner and order of addition is not considered to be particularly critical. For example, each of the components of the second layer may be added to any other component or components simultaneously, or may be added sequentially in any order. Each of the components of the second layer may be added to any other component of the second layer by impregnation, adsorption, ion-exchange, incipient wetness, precipitation, or the like, or by any other means commonly known in the art.

Preferably, the lean NOₓ trap catalyst as hereinbefore described is prepared by depositing the lean NOₓ trap catalyst on the substrate using washcoat procedures. A representative process for preparing the lean NOₓ trap catalyst using a washcoat procedure is set forth below. It will be understood that the process below can be varied according to different embodiments of the invention.

The washcoating is preferably performed by first slurrying finely divided particles of the components of the lean NOₓ trap catalyst as hereinbefore defined in an appropriate solvent, preferably water, to form a slurry. The slurry preferably contains between 5 to 70 weight percent solids, more preferably between 10 to 50 weight percent. Preferably, the particles are milled or subject to another comminution process in order to ensure that substantially all of the solid particles have a particle size of less than 20 microns in an average diameter, prior to forming the slurry. Additional components, such as stabilizers, binders, surfactants or promoters, may also be incorporated in the slurry as a mixture of water soluble or water-dispersible compounds or complexes.

The substrate may then be coated one or more times with the slurry such that there will be deposited on the substrate the desired loading of the lean NOₓ trap catalyst.

Preferably the first layer is supported/deposited directly on the metal or ceramic substrate. By "directly on" it is meant that there are no intervening or underlying layers present between the first layer and the metal or ceramic substrate.

The second layer is deposited on the first layer. Particularly preferably the second layer is deposited directly on the first layer. By "directly on" it is meant that there are no intervening or underlying layers present between the second layer and the first layer.

Thus in a preferred lean NOₓ trap catalyst of the invention, the first layer is deposited directly on metal or ceramic substrate, and the second layer is deposited on the first layer. Such lean NOₓ trap catalysts may be considered to be a two-layer lean NOₓ trap.

Preferably the first layer and/or the second layer are deposited on at least 50% of the axial length L of the substrate, more preferably on at least 70% of the axial length L of the substrate, and particularly preferably on at least 80% of the axial length L of the substrate.

In particularly preferred lean NOₓ trap catalysts of the invention, the first layer is deposited on at least 30%, preferably at least 50% of the axial length L of the substrate, and the second layer are deposited on at least 80%, preferably at least 95%, of the axial length L of the substrate. Thus in some particularly preferred lean NOₓ trap catalysts of the invention, the first layer is deposited on at least 50% of the axial length L of the substrate and the second layer is deposited on at least 95% of the axial length L of the substrate.

The lean NOₓ trap catalyst comprises a substrate and at least one layer on the substrate. Preferably, the at least one layer comprises the first layer as hereinbefore described. This can be produced by the washcoat procedure described above. One or more additional layers may be added to the one layer of NOₓ adsorber catalyst composition, such as the second layer as hereinbefore described.

A further aspect of the invention is an emission treatment system for treating a flow of a combustion exhaust gas comprising the lean NOₓ trap catalyst as hereinbefore defined and an internal combustion engine. In preferred systems, the internal combustion engine is a diesel engine, preferably a light duty diesel engine. The lean NOₓ trap catalyst may be placed in a close-coupled position or in the underfloor position.

The emission treatment system typically further comprises an emissions control device.

The emissions control device is preferably downstream of the lean NOₓ trap catalyst.

Examples of an emissions control device include a diesel particulate filter (DPF), a lean NOₓ trap (LNT), a lean NOₓ catalyst (LNC), a selective catalytic reduction (SCR) catalyst, a diesel oxidation catalyst (DOC), a catalysed soot filter (CSF), a selective catalytic reduction filter (SCRF^{™}) catalyst, an ammonia slip catalyst (ASC), a cold start catalyst (dCSC^{™}) and combinations of two or more thereof. Such emissions control devices are all well known in the art.

Some of the aforementioned emissions control devices have filtering substrates. An emissions control device having a filtering substrate may be selected from the group consisting of a diesel particulate filter (DPF), a catalysed soot filter (CSF), and a selective catalytic reduction filter (SCRF^{™}) catalyst.

It is preferred that the emission treatment system comprises an emissions control device selected from the group consisting of a lean NOₓ trap (LNT), an ammonia slip catalyst (ASC), diesel particulate filter (DPF), a selective catalytic reduction (SCR) catalyst, a catalysed soot filter (CSF), a selective catalytic reduction filter (SCRF^{™}) catalyst, and combinations of two or more thereof. More preferably, the emissions control device is selected from the group consisting of a diesel particulate filter (DPF), a selective catalytic reduction (SCR) catalyst, a catalysed soot filter (CSF), a selective catalytic reduction filter (SCRF^{™}) catalyst, and combinations of two or more thereof. Even more preferably, the emissions control device is a selective catalytic reduction (SCR) catalyst or a selective catalytic reduction filter (SCRF^{™}) catalyst.

When the emission treatment system of the invention comprises an SCR catalyst or an SCRF^{™} catalyst, then the emission treatment system may further comprise an injector for injecting a nitrogenous reductant, such as ammonia, or an ammonia precursor, such as urea or ammonium formate, preferably urea, into exhaust gas downstream of the lean NOₓ trap catalyst and upstream of the SCR catalyst or the SCRF^{™} catalyst.

Such an injector may be fluidly linked to a source (e.g. a tank) of a nitrogenous reductant precursor. Valve-controlled dosing of the precursor into the exhaust gas may be regulated by suitably programmed engine management means and closed loop or open loop feedback provided by sensors monitoring the composition of the exhaust gas.

Ammonia can also be generated by heating ammonium carbamate (a solid) and the ammonia generated can be injected into the exhaust gas.

Alternatively or in addition to the injector, ammonia can be generated in situ (e.g. during rich regeneration of a LNT disposed upstream of the SCR catalyst or the SCRF^{™} catalyst, e.g. a lean NOₓ trap catalyst of the invention). Thus, the emission treatment system may further comprise an engine management means for enriching the exhaust gas with hydrocarbons.

The SCR catalyst or the SCRF^{™} catalyst may comprise a metal selected from the group consisting of at least one of Cu, Hf, La, Au, In, V, lanthanides and Group VIII transition metals (e.g. Fe), wherein the metal is supported on a refractory oxide or molecular sieve. The metal is preferably selected from Ce, Fe, Cu and combinations of any two or more thereof, more preferably the metal is Fe or Cu.

The refractory oxide for the SCR catalyst or the SCRF^{™} catalyst may be selected from the group consisting of Al₂O₃, TiO₂, CeO₂, SiO₂, ZrO₂ and mixed oxides containing two or more thereof. The non-zeolite catalyst can also include tungsten oxide (e.g. V₂O₅/WO₃/TiO₂, WOₓ/CeZrO₂, WOₓ/ZrO₂ or Fe/WOₓ/ZrO₂).

It is particularly preferred when an SCR catalyst, an SCRF^{™} catalyst or a washcoat thereof comprises at least one molecular sieve, such as an aluminosilicate zeolite or a SAPO. The at least one molecular sieve can be a small, a medium or a large pore molecular sieve. By "small pore molecular sieve" herein we mean molecular sieves containing a maximum ring size of 8, such as CHA; by "medium pore molecular sieve" herein we mean a molecular sieve containing a maximum ring size of 10, such as ZSM-5; and by "large pore molecular sieve" herein we mean a molecular sieve having a maximum ring size of 12, such as beta. Small pore molecular sieves are potentially advantageous for use in SCR catalysts.

In the emission treatment system of the invention, preferred molecular sieves for an SCR catalyst or an SCRF^{™} catalyst are synthetic aluminosilicate zeolite molecular sieves selected from the group consisting of AEI, ZSM-5, ZSM-20, ERI including ZSM-34, mordenite, ferrierite, BEA including Beta, Y, CHA, LEV including Nu-3, MCM-22 and EU-1, preferably AEI or CHA, and having a silica-to-alumina ratio of about 10 to about 50, such as about 15 to about 40.

In a first emission treatment system embodiment, the emission treatment system comprises the lean NOₓ trap catalyst of the invention and a catalysed soot filter (CSF). The lean NOₓ trap catalyst is typically followed by (e.g. is upstream of) the catalysed soot filter (CSF). Thus, for example, an outlet of the lean NOₓ trap catalyst is connected to an inlet of the catalysed soot filter.

A second emission treatment system embodiment relates to an emission treatment system comprising the lean NOₓ trap catalyst of the invention, a catalysed soot filter (CSF) and a selective catalytic reduction (SCR) catalyst.

The lean NOₓ trap catalyst is typically followed by (e.g. is upstream of) the catalysed soot filter (CSF). The catalysed soot filter is typically followed by (e.g. is upstream of) the selective catalytic reduction (SCR) catalyst. A nitrogenous reductant injector may be arranged between the catalysed soot filter (CSF) and the selective catalytic reduction (SCR) catalyst. Thus, the catalysed soot filter (CSF) may be followed by (e.g. is upstream of) a nitrogenous reductant injector, and the nitrogenous reductant injector may be followed by (e.g. is upstream of) the selective catalytic reduction (SCR) catalyst.

In a third emission treatment system embodiment, the emission treatment system comprises the lean NOₓ trap catalyst of the invention, a selective catalytic reduction (SCR) catalyst and either a catalysed soot filter (CSF) or a diesel particulate filter (DPF).

In the third emission treatment system embodiment, the lean NOₓ trap catalyst of the invention is typically followed by (e.g. is upstream of) the selective catalytic reduction (SCR) catalyst. A nitrogenous reductant injector may be arranged between the oxidation catalyst and the selective catalytic reduction (SCR) catalyst. Thus, the catalyzed monolith substrate may be followed by (e.g. is upstream of) a nitrogenous reductant injector, and the nitrogenous reductant injector may be followed by (e.g. is upstream of) the selective catalytic reduction (SCR) catalyst. The selective catalytic reduction (SCR) catalyst are followed by (e.g. are upstream of) the catalysed soot filter (CSF) or the diesel particulate filter (DPF).

A fourth emission treatment system embodiment comprises the lean NOₓ trap catalyst of the invention and a selective catalytic reduction filter (SCRF^{™}) catalyst. The lean NOₓ trap catalyst of the invention is typically followed by (e.g. is upstream of) the selective catalytic reduction filter (SCRF^{™}) catalyst.

A nitrogenous reductant injector may be arranged between the lean NOₓ trap catalyst and the selective catalytic reduction filter (SCRF^{™}) catalyst. Thus, the lean NOₓ trap catalyst may be followed by (e.g. is upstream of) a nitrogenous reductant injector, and the nitrogenous reductant injector may be followed by (e.g. is upstream of) the selective catalytic reduction filter (SCRF^{™}) catalyst.

When the emission treatment system comprises a selective catalytic reduction (SCR) catalyst or a selective catalytic reduction filter (SCRF^{™}) catalyst, such as in the second to fourth exhaust system embodiments described hereinabove, an ASC can be disposed downstream from the SCR catalyst or the SCRF^{™} catalyst (i.e. as a separate monolith substrate), or more preferably a zone on a downstream or trailing end of the monolith substrate comprising the SCR catalyst can be used as a support for the ASC.

Disclosed herein is a vehicle. The vehicle comprises an internal combustion engine, preferably a diesel engine. The internal combustion engine preferably the diesel engine, is coupled to an emission treatment system of the invention.

It is preferred that the diesel engine is configured or adapted to run on fuel, preferably diesel fuel, comprising ≤ 50 ppm of sulfur, more preferably ≤ 15 ppm of sulfur, such as ≤ 10 ppm of sulfur, and even more preferably ≤ 5 ppm of sulfur.

The vehicle may be a light-duty diesel vehicle (LDV), such as defined in US or European legislation. A light-duty diesel vehicle typically has a weight of < 2840 kg, more preferably a weight of < 2610 kg. In the US, a light-duty diesel vehicle (LDV) refers to a diesel vehicle having a gross weight of ≤ 8,500 pounds (US lbs). In Europe, the term light-duty diesel vehicle (LDV) refers to (i) passenger vehicles comprising no more than eight seats in addition to the driver's seat and having a maximum mass not exceeding 5 tonnes, and (ii) vehicles for the carriage of goods having a maximum mass not exceeding 12 tonnes.

Alternatively, the vehicle may be a heavy-duty diesel vehicle (HDV), such as a diesel vehicle having a gross weight of > 8,500 pounds (US lbs), as defined in US legislation.

A further aspect of the invention is a method of treating an exhaust gas from an internal combustion engine comprising contacting the exhaust gas with the lean NOₓ trap catalyst as hereinbefore described or the emission treatment system as hereinbefore described. In preferred methods, the exhaust gas is a rich gas mixture. In further preferred methods, the exhaust gas cycles between a rich gas mixture and a lean gas mixture.

In some preferred methods of treating an exhaust gas from an internal combustion engine, the exhaust gas is at a temperature of about 150 to 300 °C.

In further preferred methods of treating an exhaust gas from an internal combustion engine, the exhaust gas is contacted with one or more further emissions control devices, in addition to the lean NOₓ trap catalyst as hereinbefore described. The emissions control device or devices is preferably downstream of the lean NOₓ trap catalyst.

Examples of a further emissions control device include a diesel particulate filter (DPF), a lean NOₓ trap (LNT), a lean NOₓ catalyst (LNC), a selective catalytic reduction (SCR) catalyst, a diesel oxidation catalyst (DOC), a catalysed soot filter (CSF), a selective catalytic reduction filter (SCRF^{™}) catalyst, an ammonia slip catalyst (ASC), a cold start catalyst (dCSC^{™}) and combinations of two or more thereof. Such emissions control devices are all well known in the art.

Some of the aforementioned emissions control devices have filtering substrates. An emissions control device having a filtering substrate may be selected from the group consisting of a diesel particulate filter (DPF), a catalysed soot filter (CSF), and a selective catalytic reduction filter (SCRF^{™}) catalyst.

It is preferred that the method comprises contacting the exhaust gas with an emissions control device selected from the group consisting of a lean NOₓ trap (LNT), an ammonia slip catalyst (ASC), diesel particulate filter (DPF), a selective catalytic reduction (SCR) catalyst, a catalysed soot filter (CSF), a selective catalytic reduction filter (SCRF^{™}) catalyst, and combinations of two or more thereof. More preferably, the emissions control device is selected from the group consisting of a diesel particulate filter (DPF), a selective catalytic reduction (SCR) catalyst, a catalysed soot filter (CSF), a selective catalytic reduction filter (SCRF^{™}) catalyst, and combinations of two or more thereof. Even more preferably, the emissions control device is a selective catalytic reduction (SCR) catalyst or a selective catalytic reduction filter (SCRF^{™}) catalyst.

When the the method of the invention comprises contacting the exhaust gas with an SCR catalyst or an SCRF^{™} catalyst, then the method may further comprise the injection of a nitrogenous reductant, such as ammonia, or an ammonia precursor, such as urea or ammonium formate, preferably urea, into exhaust gas downstream of the lean NOₓ trap catalyst and upstream of the SCR catalyst or the SCRF^{™} catalyst.

Such an injection may be carried out by an injector. The injector may be fluidly linked to a source (e.g. a tank) of a nitrogenous reductant precursor. Valve-controlled dosing of the precursor into the exhaust gas may be regulated by suitably programmed engine management means and closed loop or open loop feedback provided by sensors monitoring the composition of the exhaust gas.

Ammonia can also be generated by heating ammonium carbamate (a solid) and the ammonia generated can be injected into the exhaust gas.

Alternatively or in addition to the injector, ammonia can be generated in situ (e.g. during rich regeneration of a LNT disposed upstream of the SCR catalyst or the SCRF^{™} catalyst). Thus, the method may further comprise enriching of the exhaust gas with hydrocarbons.

The SCR catalyst or the SCRF^{™} catalyst may comprise a metal selected from the group consisting of at least one of Cu, Hf, La, Au, In, V, lanthanides and Group VIII transition metals (e.g. Fe), wherein the metal is supported on a refractory oxide or molecular sieve. The metal is preferably selected from Ce, Fe, Cu and combinations of any two or more thereof, more preferably the metal is Fe or Cu.

The refractory oxide for the SCR catalyst or the SCRF^{™} catalyst may be selected from the group consisting of Al₂O₃, TiO₂, CeO₂, SiO₂, ZrO₂ and mixed oxides containing two or more thereof. The non-zeolite catalyst can also include tungsten oxide (e.g. V₂O₅/WO₃/TiO₂, WOₓ/CeZrO₂, WOₓ/ZrO₂ or Fe/WOₓ/ZrO₂).

It is particularly preferred when an SCR catalyst, an SCRF^{™} catalyst or a washcoat thereof comprises at least one molecular sieve, such as an aluminosilicate zeolite or a SAPO. The at least one molecular sieve can be a small, a medium or a large pore molecular sieve. By "small pore molecular sieve" herein we mean molecular sieves containing a maximum ring size of 8, such as CHA; by "medium pore molecular sieve" herein we mean a molecular sieve containing a maximum ring size of 10, such as ZSM-5; and by "large pore molecular sieve" herein we mean a molecular sieve having a maximum ring size of 12, such as beta. Small pore molecular sieves are potentially advantageous for use in SCR catalysts.

In the method of treating an exhaust gas of the invention, preferred molecular sieves for an SCR catalyst or an SCRF^{™} catalyst are synthetic aluminosilicate zeolite molecular sieves selected from the group consisting of AEI, ZSM-5, ZSM-20, ERI including ZSM-34, mordenite, ferrierite, BEA including Beta, Y, CHA, LEV including Nu-3, MCM-22 and EU-1, preferably AEI or CHA, and having a silica-to-alumina ratio of about 10 to about 50, such as about 15 to about 40.

In a first embodiment, the method comprises contacting the exhaust gas with the lean NOₓ trap catalyst of the invention and a catalysed soot filter (CSF). The lean NOₓ trap catalyst is typically followed by (e.g. is upstream of) the catalysed soot filter (CSF). Thus, for example, an outlet of the lean NOₓ trap catalyst is connected to an inlet of the catalysed soot filter.

A second embodiment of the method of treating an exhaust gas relates to a method comprising contacting the exhaust gas with the lean NOₓ trap catalyst of the invention, a catalysed soot filter (CSF) and a selective catalytic reduction (SCR) catalyst.

The lean NOₓ trap catalyst is typically followed by (e.g. is upstream of) the catalysed soot filter (CSF). The catalysed soot filter is typically followed by (e.g. is upstream of) the selective catalytic reduction (SCR) catalyst. A nitrogenous reductant injector may be arranged between the catalysed soot filter (CSF) and the selective catalytic reduction (SCR) catalyst. Thus, the catalysed soot filter (CSF) may be followed by (e.g. is upstream of) a nitrogenous reductant injector, and the nitrogenous reductant injector may be followed by (e.g. is upstream of) the selective catalytic reduction (SCR) catalyst.

In a third embodiment of the method of treating an exhaust gas, the method comprises contacting the exhaust gas with the lean NOₓ trap catalyst of the invention, a selective catalytic reduction (SCR) catalyst and either a catalysed soot filter (CSF) or a diesel particulate filter (DPF).

In the third embodiment of the method of treating an exhaust gas, the lean NOₓ trap catalyst of the invention is typically followed by (e.g. is upstream of) the selective catalytic reduction (SCR) catalyst. A nitrogenous reductant injector may be arranged between the oxidation catalyst and the selective catalytic reduction (SCR) catalyst. Thus, the lean NOₓ trap catalyst may be followed by (e.g. is upstream of) a nitrogenous reductant injector, and the nitrogenous reductant injector may be followed by (e.g. is upstream of) the selective catalytic reduction (SCR) catalyst. The selective catalytic reduction (SCR) catalyst are followed by (e.g. are upstream of) the catalysed soot filter (CSF) or the diesel particulate filter (DPF).

A fourth embodiment of the method of treating an exhaust gas comprises the lean NOₓ trap catalyst of the invention and a selective catalytic reduction filter (SCRF^{™}) catalyst. The lean NOₓ trap catalyst of the invention is typically followed by (e.g. is upstream of) the selective catalytic reduction filter (SCRF^{™}) catalyst.

A nitrogenous reductant injector may be arranged between the lean NOₓ trap catalyst and the selective catalytic reduction filter (SCRF^{™}) catalyst. Thus, the lean NOₓ trap catalyst may be followed by (e.g. is upstream of) a nitrogenous reductant injector, and the nitrogenous reductant injector may be followed by (e.g. is upstream of) the selective catalytic reduction filter (SCRF^{™}) catalyst.

When the emission treatment system comprises a selective catalytic reduction (SCR) catalyst or a selective catalytic reduction filter (SCRF^{™}) catalyst, such as in the second to fourth method embodiments described hereinabove, an ASC can be disposed downstream from the SCR catalyst or the SCRF^{™} catalyst (i.e. as a separate monolith substrate), or more preferably a zone on a downstream or trailing end of the monolith substrate comprising the SCR catalyst can be used as a support for the ASC.

### EXAMPLES

The invention will now be illustrated by the following non-limiting examples.

### Materials

All materials are commercially available and were obtained from known suppliers, unless noted otherwise.

### Catalyst 1 (Comparative)

### First Layer:

A CeO₂-BaCO₃ composite material was formed by spray-drying barium acetate onto high surface area ceria, followed by calcination at 650 °C for 1 hour. 1.71 g/in³ (0.104 g/cm³) [Al₂O₃.Ce(12.5%)] (commercially available) was made into a slurry with distilled water and then milled to a d₉₀ of 13-15 µm. To the slurry, 95 g/ft³ (0.00335 g/cm³) Pt malonate and 19 g/ft³ (0.00067 g/cm³) Pd nitrate solution was then added, and stirred until homogenous. The Pt/Pd was allowed to adsorb onto the [Al₂O₃.Ce(12.5%)] support for 1 hour.

To this was then added 3.33 g/in³ (0.20 g/cm³) of the CeO₂-BaCO₃ composite material.

The resultant slurry was made into a washcoat and thickened with natural thickener (natrosol).

This washcoat was then coated onto a ceramic or metallic monolith using standard coating procedures, dried at 100 °C and calcined at 500 °C for 45mins.

The Ba was present in about 4.3 wt% (4.6mol%).

### Second Layer:

As second washcoat was prepared by making 0.5 (0.03 g/cm³) [Ce.Zr] into a slurry and adding 5 g/ft³ (0.000176 g/cm³) Rhodium Nitrate to it before adjusting the pH of the mixture to pH~7 with ammonia. The resultant slurry was made into a washcoat and thickened with natural thickener (natrosol).

The second washcoat was then coated on top of the previous calcined washcoat using standard coating procedures, dried at 100 °C and calcined at 500 °C for 45mins.

### Catalyst 2

### First Layer:

1.2 g/in³ (0.07 g/cm³) [Al₂O₃.Si(5%)] (commercially available) was made into a slurry with distilled water and then milled to a d₉₀ of 13-15 µm. To this slurry was added 200 g/ft³ (0.007 g/cm³) citric acid followed by 100 g/ft³ (0.0035 g/cm³) barium acetate and the mixture was stirred until homogenous. 43 g/ft³ (0.0015 g/cm³) platinum nitrate and 22 g/ft³ (0.00077 g/cm³) palladium nitrate were added and stirred until homogenous. The Pt/Pd is allowed to adsorb onto the [Al₂O₃.Si(5%)] support for 1 hour. To this was then added 0.3 g/in³ (0.018 g/cm³) beta-zeolite (commercial available) and stirred until homogenous. The resultant slurry was made into a washcoat and thickened with natural thickener (natrosol).

This washcoat was then coated onto a ceramic or metallic monolith using standard coating procedures to target a 50% coating depth, dried at 100 °C and calcined at 500 °C for 45mins.

### Second Layer:

A CeO₂-BaCO₃ composite material was formed by spray-drying barium acetate onto high surface area ceria, followed by calcination at 650 °C for 1 hour.

The second washcoat was prepared by making 1.24 g/in³ (0.076 g/ cm³) [Al₂O₃.La(3%)] into a slurry with distilled water and then milled to a d₉₀ of 13-15 µm. To the slurry, 72.9 g/ft³ (0.00257 g/cm³) Pt malonate and 14.6 g/ft³ (0.000516 g/cm³) Pd nitrate solution was then added, and stirred until homogenous. The Pt/Pd was allowed to adsorb onto the [Al₂O₃. La(3%)] support for 1 hour.

To this was then added 3.0 g/in³ (0.183 g/cm³) of the CeO₂-BaCO₃ composite material.

The resultant slurry was made into a washcoat and thickened with natural thickener (natrosol).

This washcoat was then coated on top of the previously calcined washcoat using standard coating procedures and a target coating depth of 90%, dried at 100 °C and calcined at 500 °C for 45mins.

### Experimental results

Catalyst 1 and Catalyst 2 were hydrothermally aged at 800°C for 5h, in a gas stream consisting of 10% H₂O, 20% O₂, and balance N₂. They were performance tested over a simulated MVEG-B emissions cycle using a 1.6 litre bench mounted diesel engine. Emissions were measured pre- and post-catalyst.

### Example 1

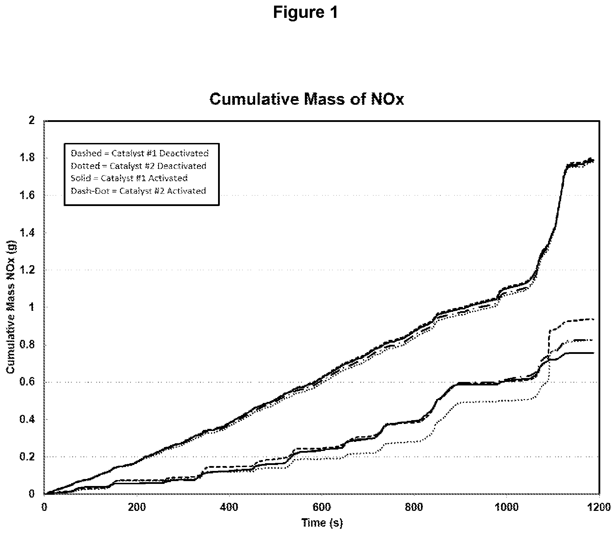

The cumulative NOₓ pollutant emissions are shown in **Figure 1****.** The difference between the engine out (pre-catalyst) NOₓ emissions and the post-catalyst NOₓ emissions indicated the amount of NOₓ removed over the catalyst. It can be seen from **Figure 1** that catalyst 2, which comprises of a lean-DOC lower layer zone, had a larger capacity to adsorb NOₓ in a deactivated state than comparative catalyst 1, which does not contain a lean-DOC zone.

### Example 2

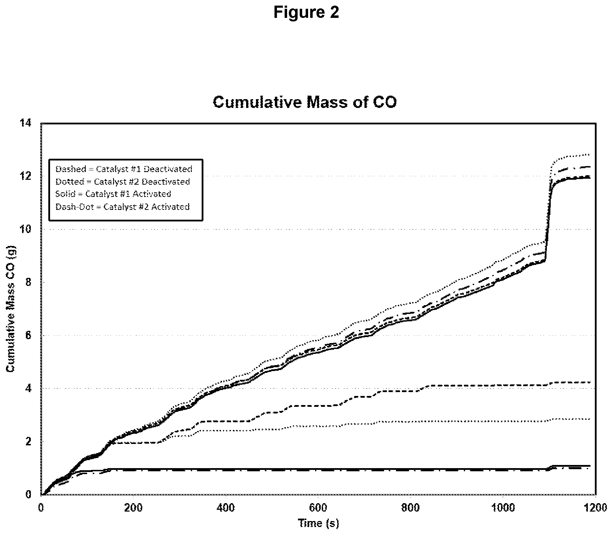

The cumulative CO pollutant emissions are shown in **Figure 2**. The difference between the engine out (pre-catalyst) CO emissions and the post-catalyst CO emissions indicated the amount of CO removed over the catalyst. It can be seen from **Figure 2** that catalyst 2, which comprises of a lean-DOC lower layer zone, had a greater ability to convert CO in a deactivated state and activated state than comparative catalyst 1, which does not contain a lean-DOC zone.

### Example 3

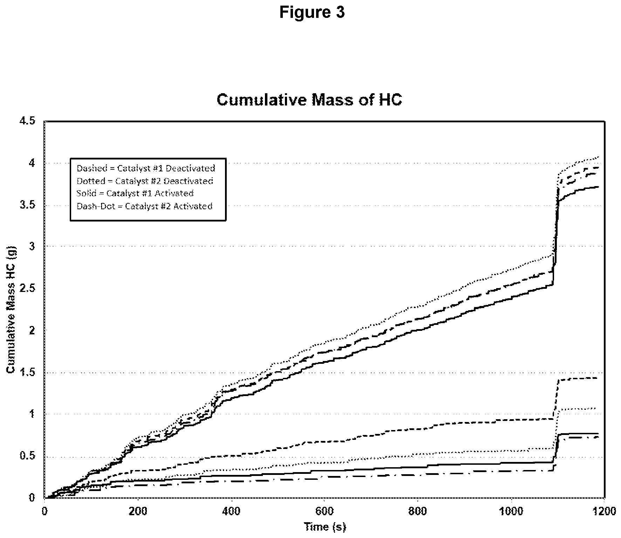

The cumulative HC pollutant emissions are shown in **Figure 3****.** The difference between the engine out (pre-catalyst) HC emissions and the post-catalyst HC emissions indicated the amount of HC removed over the catalyst. It can be seen from **Figure 3** that catalyst 2, which comprises of a lean-DOC lower layer zone, had a greater ability to convert HC in a deactivated state and activated state than comparative catalyst 1, which does not contain a lean-DOC zone.

### Example 4

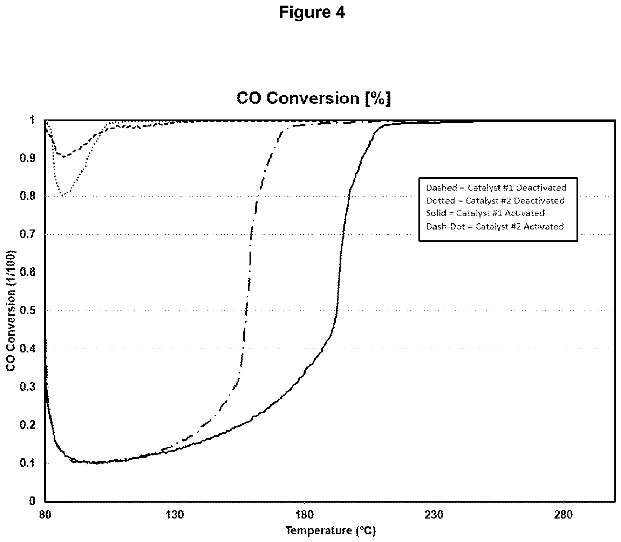

Catalyst 1 and catalyst 2 were hydrothermally aged at 800°C for 5h, in a gas stream consisting of 10% H₂O, 20% O₂, and balance N₂. Both catalysts were tested on a SCAT Light-Off test, testing condition are shown in **Table 1.** It can be seen from **Figure 4** that catalyst 2, which comprises of a lean-DOC lower layer zone, had a lower light off temperature for CO conversion in a deactivated state than comparative catalyst 1, which does not contain a lean-DOC zone.

**Table 1: SCAT Light Off Test gas mixture and conditions.**

| Temp ramp | 20°C/min |
|---|---|
| Temp start-finish | 80-600°C |
| CO 2 | 4% |
| O₂ | 14% |
| CO | 1500 ppm |
| NO | 100 ppm |
| Decane (C3) | 67 ppm |
| Toluene | 27 ppm |
| Methane (C3) | 10 ppm |
| Propene (C3) | 40 ppm |
| HC total (C1) | 432 ppm |
| H₂O 2 | 4% |
| SV | 55k h⁻¹ |

## Claims

1. A lean NOₓ trap catalyst, comprising:
i) a first p layer on a substrate, said first layer comprising
a mixture or alloy of platinum and palladium,
a first inorganic oxide selected from the group consisting of alumina, silica-alumina or a magnesia/alumina composite oxide,
a promoter, wherein the promoter comprises manganese, bismuth, or barium,
and a hydrocarbon absorbing material, wherein the hydrocarbon absorbing material is a molecular sieve.; and
ii) a second deposited on the first layer, said second layer comprising one or more platinum group metals, an oxygen storage capacity (OSC) material selected from the group consisting of cerium oxide, zirconium oxide, a ceria-zirconia mixed oxide, and an alumina-ceria-zirconia mixed oxide, and a second inorganic oxide;
wherein the first layer is free of oxygen storage capacity (OSC) material.

2. The lean NOₓ trap catalyst of claim 1, wherein the ratio of platinum to palladium in the mixture or alloy of platinum and palladium is from 1:1 to 10:1 on a w/w basis, preferably about 2:1 on a w/w basis.

3. The lean NOₓ trap catalyst of any preceding claim, wherein the first inorganic oxide is silica-alumina.

4. The lean NOₓ trap catalyst of any preceding claim, wherein the molecular sieve is a zeolite, preferably wherein the zeolite is beta zeolite.

5. The lean NOₓ trap catalyst of any preceding claim, wherein said one or more platinum group metals is selected from the group consisting of palladium, platinum, rhodium, and mixtures thereof, preferably wherein said one or more platinum group metals is a mixture or alloy of platinum and palladium.

6. The lean NOₓ trap catalyst of claim 5, wherein the ratio of platinum to palladium is from 2:1 to 12:1 on a w/w basis, preferably about 5:1 on a w/w basis.

7. The lean NOₓ trap catalyst of any preceding claim, wherein the second layer further comprises an alkali or alkali earth metal, neodymium, or lanthanum, preferably wherein the alkali earth metal is barium.

8. The lean NOₓ trap catalyst of any preceding claim, wherein the second inorganic oxide is selected from the group consisting of alumina, magnesia, lanthana, silica, titania, niobia, tantalum oxides, molybdenum oxides, tungsten oxides, and mixed oxides or composite oxides thereof.

9. The lean NOₓ trap catalyst of any preceding claim, wherein the second inorganic oxide is alumina, a lanthana/alumina composite oxide, or a magnesia/alumina composite oxide, preferably wherein the second inorganic oxide is a lanthana/alumina composite oxide.

10. An emission treatment system for treating a flow of a combustion exhaust gas, comprising the lean NOₓ trap catalyst of any one of claims 1 to 9 and an internal combustion engine, preferably wherein the internal combustion engine is a diesel engine.

11. The emission treatment system of claim 10, further comprising a selective catalytic reduction catalyst system, a particulate filter, a selective catalytic reduction filter system, a passive NOₓ adsorber, a three-way catalyst system, or combinations thereof.

12. A method of treating an exhaust gas from an internal combustion engine comprising contacting the exhaust gas with the lean NOₓ trap catalyst of any one of claims 1 to 9 or the emission treatment system of claim 10 or claim 11

## Patentansprüche

1. Magerer NOₓ-Fallenkatalysator, umfassend:
i) eine erste Schicht auf einem Substrat, die erste Schicht umfassend
eine Mischung oder Legierung aus Platin und Palladium,
ein erstes anorganisches Oxid, ausgewählt aus der Gruppe bestehend aus Aluminiumoxid, Siliciumdioxid-Aluminiumoxid oder einem Magnesiumoxid-Aluminiumoxid-Verbundoxid, einen Promoter, wobei der Promoter Mangan, Wismut oder Barium umfasst,
und ein kohlenwasserstoffabsorbierendes Material, wobei das kohlenwasserstoffabsorbierende Material ein Molekularsieb ist; und
ii) eine zweite, auf der ersten Schicht abgeschiedene Schicht, wobei die zweite Schicht ein oder mehrere Metalle der Platingruppe, ein Material mit Sauerstoffspeicherkapazität (OSC), ausgewählt aus der Gruppe bestehend aus Ceroxid, Zirkoniumoxid, einem Ceroxid-Zirkoniumoxid-Mischoxid und einem Aluminiumoxid-Ceroxid-Zirkoniumoxid-Mischoxid, und ein zweites anorganisches Oxid umfasst;
wobei die erste Schicht frei von einem Material mit Sauerstoffspeicherkapazität (OSC) ist.

2. Magerer NOₓ-Fallenkatalysator nach Anspruch 1, wobei das Verhältnis von Platin zu Palladium in der Mischung oder der Legierung aus Platin und Palladium von 1:1 bis 10:1 auf Gewichtsprozentbasis, vorzugsweise etwa 2:1 auf Gewichtsprozentbasis, beträgt.

3. Magerer NOₓ-Fallenkatalysator nach einem der vorstehenden Ansprüche, wobei das erste anorganische Oxid Siliciumdioxid-Aluminiumoxid ist.

4. Magerer NOₓ-Fallenkatalysator nach einem der vorstehenden Ansprüche, wobei das Molekularsieb ein Zeolith ist, vorzugsweise wobei der Zeolith ein Beta-Zeolith ist.

5. Magerer NOₓ-Fallenkatalysator nach einem der vorstehenden Ansprüche, wobei das eine oder die mehreren Metalle der Platingruppe aus der Gruppe ausgewählt sind, die aus Palladium, Platin, Rhodium und deren Mischungen davon besteht, wobei das eine oder die mehreren Metalle der Platingruppe vorzugsweise eine Mischung oder Legierung aus Platin und Palladium ist.

6. Magerer NOₓ-Fallenkatalysator nach Anspruch 5, wobei das Verhältnis von Platin zu Palladium von 2:1 bis 12:1 auf Gewichtsprozentbasis, vorzugsweise etwa 5:1 auf Gewichtsprozentbasis, beträgt.

7. Magerer NOₓ-Fallenkatalysator nach einem der vorstehenden Ansprüche, wobei die zweite Schicht ferner ein Alkali- oder Erdalkalimetall, Neodym oder Lanthan umfasst, wobei das Erdalkalimetall vorzugsweise Barium ist.

8. Magerer NOₓ-Fallenkatalysator nach einem der vorstehenden Ansprüche, wobei das zweite anorganische Oxid aus der Gruppe ausgewählt ist, die aus Aluminiumoxid, Magnesiumoxid, Lanthan, Siliciumdioxid, Titandioxid, Niobiumoxid, Tantaloxiden, Molybdänoxiden, Wolframoxiden und Mischoxiden oder Verbundoxiden davon besteht.

9. Magerer NOₓ-Fallenkatalysator nach einem der vorstehenden Ansprüche, wobei das zweite anorganische Oxid Aluminiumoxid, ein Lanthanoxid/Aluminiumoxid-Verbundoxid oder ein Magnesia/Aluminiumoxid-Verbundoxid ist, vorzugsweise wobei das zweite anorganische Oxid ein Lanthanoxid/Aluminiumoxid-Verbundoxid ist.

10. Emissionsbehandlungssystem zur Behandlung eines Verbrennungsabgasstroms, umfassend den mageren NOₓ-Fallenkatalysator nach einem der Ansprüche 1 bis 9 und einen Verbrennungsmotor, wobei der Verbrennungsmotor vorzugsweise ein Dieselmotor ist.

11. Emissionsbehandlungssystem nach Anspruch 10, ferner umfassend ein selektives katalytisches Reduktionskatalysatorsystem, einen Partikelfilter, ein selektives katalytisches Reduktionsfiltersystem, einen passiven NOₓ-Adsorber, ein Drei-Wege-Katalysatorsystem oder Kombinationen davon.

12. Verfahren zur Behandlung eines Abgases aus einem Verbrennungsmotor, umfassend ein Inkontaktbringen des Abgases mit dem mageren NOₓ-Fallenkatalysator nach einem der Ansprüche 1 bis 9 oder dem Emissionsbehandlungssystem nach Anspruch 10 oder 11.

## Revendications

1. Catalyseur de piège à NOₓ pauvre, comprenant :
i) une première couche sur un substrat, ladite première couche comprenant
un mélange ou alliage de platine et de palladium,
un premier oxyde inorganique choisi dans le groupe constitué par alumine, silice-alumine ou un oxyde composite magnésie/alumine, un promoteur, le promoteur comprenant du manganèse, du bismuth ou du baryum,
et un matériau absorbant les hydrocarbures, le matériau absorbant les hydrocarbures étant un tamis moléculaire. ; et
ii) une seconde déposée sur la première couche, ladite seconde couche comprenant un ou plusieurs métaux du groupe du platine, un matériau à capacité de stockage d'oxygène (OSC) choisi dans le groupe constitué par oxyde de cérium, oxyde de zirconium, un oxyde mixte oxyde de cérium-zircone, et un oxyde mixte alumine-oxyde de cérium-zircone, et un second oxyde inorganique ;
dans lequel la première couche est exempte de matériau à capacité de stockage d'oxygène (OSC).

2. Catalyseur de piège à NOₓ pauvre selon la revendication 1, dans lequel le rapport du platine au palladium dans le mélange ou alliage de platine et de palladium va de 1:1 à 10:1 sur une base pondérale, de préférence environ 2:1 sur une base pondérale.

3. Catalyseur de piège à NOₓ pauvre selon l'une quelconque revendication précédente, dans lequel le premier oxyde inorganique est silice-alumine.

4. Catalyseur de piège à NOₓ pauvre selon l'une quelconque revendication précédente, dans lequel le tamis moléculaire est une zéolite, de préférence la zéolite étant une zéolite bêta.

5. Catalyseur de piège à NOₓ pauvre selon l'une quelconque revendication précédente, dans lequel ledit ou lesdits métaux du groupe du platine sont choisis dans le groupe constitué par palladium, platine, rhodium, et mélanges de ceux-ci, de préférence dans lequel ledit ou lesdits métaux du groupe du platine sont un mélange ou alliage de platine et de palladium.

6. Catalyseur de piège à NOₓ pauvre selon la revendication 5, dans lequel le rapport du platine au palladium va de 2:1 à 12:1 sur une base pondérale, de préférence environ 5:1 sur une base pondérale.

7. Catalyseur de piège à NOₓ pauvre selon l'une quelconque revendication précédente, dans lequel la seconde couche comprend en outre un métal alcalin ou alcalino-terreux, du néodyme, ou du lanthane, de préférence le métal alcalino-terreux étant du baryum.

8. Catalyseur de piège à NOₓ pauvre selon l'une quelconque revendication précédente, dans lequel le second oxyde inorganique est choisi dans le groupe constitué par alumine, magnésie, oxyde de lanthane, silice, dioxyde de titane, oxyde de niobium, oxydes de tantale, oxydes de molybdène, oxydes de tungstène, et oxydes mixtes ou oxydes composites de ceux-ci.

9. Catalyseur de piège à NOₓ pauvre selon l'une quelconque revendication précédente, dans lequel le second oxyde inorganique est de l'alumine, un oxyde composite oxyde de lanthane/alumine, ou un oxyde composite magnésie/alumine, de préférence le second oxyde inorganique étant un oxyde composite oxyde de lanthane/alumine.

10. Système de traitement d'émissions destiné à traiter un flux d'un gaz de combustion d'échappement, comprenant le catalyseur de piège à NOₓ pauvre selon l'une quelconque des revendications 1 à 9 et un moteur à combustion interne, de préférence le moteur à combustion interne étant un moteur diesel.

11. Système de traitement d'émissions selon la revendication 10, comprenant en outre un système de catalyseur de réduction catalytique sélective, un filtre à particules, un système de filtre de réduction catalytique sélective, un adsorbeur de NOₓ passif, un système de catalyseur à trois voies, ou des combinaisons de ceux-ci.

12. Procédé de traitement d'un gaz d'échappement provenant d'un moteur à combustion interne comprenant la mise en contact du gaz d'échappement avec le catalyseur de piège à NOₓ pauvre selon l'une quelconque des revendications 1 à 9 ou le système de traitement d'émissions selon la revendication 10 ou la revendication 11
